# EUROPÄISCHE PATENTANMELDUNG

(11) **EP 2 305 417 A2**
(43) Veröffentlichungstag der Anmeldung: **06.04.2011**
(21) Anmeldenummer: 10185846.2
(22) Anmeldetag: 01.10.2010
(51) Int. Cl.: B23Q 1/00, B23Q 17/24

(54) **Optisches Assistenzsystem für Werkzeugmaschinen**

(30) Priorität: 02.10.2009 DE 102009045298
(71) Anmelder: Traub Drehmaschinen GmbH & Co. KG, 73262 Reichenbach (DE)
(72) Erfinder: Oßwald, Ernst, 73262 Reichenbach (DE)
(74) Vertreter: Hoeger, Stellrecht & Partner Patentanwälte

(57) **Zusammenfassung**

Um ein optisches Assistenzsystem für Werkzeugmaschinen derart zu verbessern, dass sich die Vorgänge in einem Arbeitsraum optimal beobachten lassen, wird vorgeschlagen, dass eine in einem Arbeitsraum (64) der Werkzeugmaschine positionierbare Bildaufnahmeeinheit (72,74) und eine von der Bildaufnahmeeinheit getrennte, außerhalb des Arbeitsraums positionierbare Empfangseinheit (102) umfasst, dass die Bildaufnahmeeinheit ein Gehäuse (120,140) umfasst, welches innerhalb des Arbeitsraums an mehreren Orten positionierbar ist, dass in dem Gehäuse eine Bilderfassungseinheit mit einer Abbildungsoptik und mit einem ein von der Abbildungsoptik erzeugtes Bild in elektronische Bildsignale umsetzenden Bildsensor vorgesehen ist und dass in dem Gehäuse eine auf den Bildsignalen basierende, Daten zu der Empfangseinheit übertragende Übertragungseinheit angeordnet ist.

## Beschreibung

Die Erfindung betrifft ein optisches Assistenzsystem für Werkzeugmaschinen, umfassend eine Bildaufnahmeeinheit.

Es sind Assistenzsysteme bekannt, mit welchem sich Vorgänge in einem Arbeitsraum einer Werkzeugmaschine beobachten lassen, wobei bei diesen Assistenzsystemen vorzugsweise die Kamera außerhalb des Arbeitsraums angeordnet ist.

Eine derartige Beobachtung von Vorgängen im Arbeitsraum von einer außerhalb des Arbeitsraums angeordneten Kamera schafft üblicherweise Probleme hinsichtlich der Möglichkeiten, die für die Beobachtungen im Arbeitsraum zur Verfügung stehen.

Der Erfindung liegt daher die Aufgabe zugrunde, ein optisches Assistenzsystem zu schaffen, mit welchem sich die Vorgänge in einem Arbeitsraum optimal beobachten lassen.

Diese Aufgabe wird durch ein optisches Assistenzsystem für Werkzeugmaschinen erfindungsgemäß dadurch gelöst, dass das Assistenzsystem eine in einem Arbeitsraum der Werkzeugmaschine positionierbare Bildaufnahmeeinheit und eine von der Bildaufnahmeeinheit getrennte, außerhalb des Arbeitsraums positionierbare Empfangseinheit umfasst, dass die Bildaufnahmeeinheit ein Gehäuse umfasst, welches innerhalb des Arbeitsraums an mehreren Orten positionierbar ist, dass in dem Gehäuse eine Bilderfassungseinheit mit einer Abbildungsoptik und mit einem ein von der Abbildungsoptik erzeugtes Bild in elektronische Bildsignale umsetzenden Bildsensor vorgesehen ist und dass in dem Gehäuse eine auf den Bildsignalen basierende, Daten zu der Empfangseinheit übertragende Übertragungseinheit angeordnet ist.

Der Vorteil des erfindungsgemäßen Systems ist darin zu sehen, dass durch die flexible Positionierbarkeit der Bildaufnahmeeinheit mittels des Gehäuses im Arbeitsraum die Möglichkeit besteht, die Bildaufnahmeeinheit an mehreren Orten, das heißt mindestens zwei Orten, innerhalb des Arbeitsraums zu positionieren und somit die Möglichkeit besteht, unterschiedliche Situationen innerhalb des Arbeitsraums durch ein geeignetes Bild derselben zu erfassen.

Eine Übertragungseinheit im Sinne der vorliegenden Erfindung ist so ausgebildet, dass sie als auf den Bildsignalen basierende Daten beispielsweise die Bildsignale selbst und/oder aus den Bildsignalen erzeugte Bilddaten und/oder auf den Bildsignalen basierende Auswertedaten übertragen kann, wobei die Auswertedaten insbesondere Ergebnisse einer Bildauswertung sein können.

Insbesondere ist die Übertragungseinheit ergänzend oder alternativ dazu auch noch in der Lage, als Daten Funktionsdaten der Bildaufnahmeeinheit zu übertragen, mit welchen Funktionen der Bildaufnahmeeinheit übermittelbar und/oder steuerbar sind.

Eine Empfangseinheit im Sinne der vorliegenden Erfindung ist so ausgebildet, dass sie in der Lage ist, die von der Übertragungseinheit gesendeten Daten zu empfangen, die beispielsweise Bildsignale und/oder Bilddaten und/oder Auswertedaten und/oder Funktionsdaten der Bildaufnahmeeinheit sein können.

Bei dem erfindungsgemäßen Assistenzsystem ist es denkbar, die Bildaufnahmeeinheit über eine galvanische Kopplung, eine induktive Kopplung oder eine kapazitive Kopplung von extern mit elektrischer Energie zu versorgen, wobei bei ausschließlich externer Energieversorgung eine derartige Energieversorgung zumindest während der Funktionszeiten des Assistenzsystems ständig erfolgen muss.

Aus Gründen der flexiblen Positionierung derselben ist es jedoch besonders vorteilhaft, wenn in dem Gehäuse eine Energieversorgungseinheit vorgesehen ist.

Eine Energieversorgungseinheit ist beispielsweise so ausgebildet, dass diese einen Energiespeicher umfasst. Damit ist die Bildaufnahmeeinheit unterbrechungsfrei betreibbar und die Energieversorgung des Assistenzsystems kann auf die Zeitintervalle beschränkt werden, beispielsweise Zeitintervalle, in denen der Energiespeicher aufgeladen wird.

Dabei kann die Energieversorgung innerhalb der Intervalle ebenfalls galvanisch, induktiv oder kapazitiv erfolgen.

Ein derartiger Energiespeicher ist beispielsweise ein Speicher für elektrische Energie und im konkreten Ausführungsbeispiel entweder als Kondensator oder als Akkumulator oder als Batterie ausgebildet.

Alternativ oder ergänzend hierzu ist vorteilhafterweise vorgesehen, dass die Energieversorgungseinheit eine Energieerzeugungseinheit umfasst.

Eine derartige Energieerzeugungseinheit könnte theoretisch jede Einheit zur Erzeugung elektrischer Energie, beispielsweise eine Brennstoffzelle, sein.

Eine besonders vorteilhafte Lösung sieht vor, dass die Energieerzeugungseinheit einen Generator umfasst.

Ein derartiger Generator kann in unterschiedlichster Art und Weise angetrieben sein.

Eine Möglichkeit wäre ein Antrieb des Generators über eine berührungslose Kopplung, beispielsweise über Magnetfelder.

Eine besonders vorteilhafte Lösung sieht vor, dass der Generator durch einen externen Antrieb mechanisch antreibbar ist.

Ein derartiger externer Antrieb kann beispielsweise ein Antrieb sein, der an einer definierten Stelle angeordnet ist und an den Generator dann ankoppelbar ist, wenn die Bildaufnahmeeinheit zu dieser Stelle bewegt und in einer bestimmten Position ausgerichtet positioniert ist.

Eine andere vorteilhafte Lösung sieht vor, dass das die Bildaufnahmeeinheit tragende Maschinenelement mit einem mechanischen Antrieb für den Generator versehen ist.

Um den Energiespeicher aufzuladen, bestehen verschiedene Möglichkeiten, eine Möglichkeit sieht vor, dass der Energiespeicher über die Energieerzeugungseinheit aufladbar ist, so dass die Energieerzeugungseinheit entweder permanent oder temporär Energie erzeugen kann, die beispielsweise in dem Energiespeicher gespeichert werden kann, um der Bildaufnahmeeinheit eine unterbrechungsfreie Stromversorgung zur Verfügung zu stellen.

Alternativ dazu ist denkbar, dass der Energiespeicher über einen externen Stromversorgungsanschluss aufladbar ist.

Hinsichtlich der flexiblen Montage des Gehäuses in dem Arbeitsraum wurden bislang keine näheren Angaben gemacht.

So sieht eine vorteilhafte Lösung vor, dass das Gehäuse der Bildaufnahmeeinheit über ein flexibel an den mehreren Orten befestigbares Montageelement im Arbeitsraum montierbar ist.

Ein derart flexibel befestigbares Montageelement ist beispielsweise ein mit einem Magnetfuß versehenes Montageelement, welches an verschiedenen Stellen im Arbeitsraum montierbar und fixierbar ist.

Alternative dazu ist auch ein durch Unterdruck fixierbares Montageelement denkbar.

Es ist aber auch denkbar, das Montagelement so auszubilden, dass es in an verschiedenen Stellen, jedoch identisch ausgebildeten Aufnahmen im Arbeitsraum montierbar ist.

Eine andere vorteilhafte Lösung sieht vor, dass das Gehäuse der Bildaufnahmeeinheit an einem Werkzeugträger der Werkzeugmaschine montierbar ist.

Dabei wäre es beispielsweise denkbar, an dem Werkzeugträger eine spezielle Aufnahme vorzusehen, in welcher das Gehäuse montierbar ist, so dass das Gehäuse mit dem Werkzeugträger in dem Arbeitsraum mitbewegbar ist.

Eine besonders günstige Lösung sieht jedoch vor, dass das Gehäuse in einer Werkzeughalteraufnahme an dem Werkzeugträger montierbar ist, so dass das Vorsehen einer separaten Aufnahme für das Gehäuse überhaupt nicht nötig ist, sondern eine ohnehin vorhandene Werkzeughalteraufnahme an dem Werkzeugträger hierzu eingesetzt werden kann.

Vorzugsweise ist hierzu das Gehäuse mit einer Standardwerkzeugfixierung versehen, wie sie auch zur Fixierung der übrigen Werkzeuge an dem Werkzeugträger vorgesehen sind.

Hinsichtlich der Ausbildung des Gehäuses wurden bislang keine näheren Angaben gemacht.

So sieht eine vorteilhafte Lösung vor, dass das Gehäuse mediendicht ausgebildet ist. Eine derartige mediendichte Ausbildung des Gehäuses hat den Vorteil, dass damit das Gehäuse den in diesem angeordneten Komponenten ausreichend Schutz gegen im Arbeitsraum vorhandene Medien, d.h. beispielsweise Kühlschmierstoff, bietet.

Ferner ist vorzugsweise vorgesehen, dass das Gehäuse späneflugfest ausgebildet ist.

Eine derartige späneflugfeste Ausbildung des Gehäuses hat den Vorteil, dass dieses auch während der Bearbeitung des Werkstücks im Arbeitsraum verbleiben kann und während der Bearbeitung eines Werkstücks nicht aus dem Arbeitsraum entfernt werden muss, so dass die Möglichkeit besteht, entweder den Bearbeitungsprozess des Werkstücks unmittelbar zu beobachten oder unmittelbar vor Beginn und nach Beendigung des Bearbeitungsvorgangs wiederum Objekte im Arbeitsraum zu erfassen.

Um mit der Bilderfassungseinheit die Bilder der einzelnen Objekte im Arbeitsraum zuverlässig erfassen zu können, ist vorgesehen, dass das Gehäuse mindestens ein optisch transparentes Fenster für die Aufnahme eines Bildes aufweist.

Ferner ist vorzugsweise vorgesehen, dass das mindestens eine Fenster späneflugfest ausgebildet ist, so dass das Fenster auch dem Späneflug während der Bearbeitung eines Werkstücks standhält.

In den Fällen, in denen das Fenster beispielsweise nicht späneflugfest ausgebildet ist, ist vorzugsweise vorgesehen, dass das Gehäuse eine Schutzabdeckung für das Fenster aufweist, so dass mit dieser Schutzabdeckung die Späneflugfestigkeit sichergestellt und insbesondere die Beschädigung des Fensters vermieden werden kann.

Prinzipiell könnte eine derartige Schutzabdeckung so ausgeführt sein, dass sie manuell entfernt werden kann.

Besonders vorteilhaft ist es jedoch, wenn die Schutzabdeckung für das Fenster durch eine Antriebseinheit zwischen einer aktiven Stellung und einer inaktiven Stellung bewegbar ist, so dass kein Eingriff in den Arbeitsraum notwendig ist, um die Schutzabdeckungen zu bewegen.

Beispielsweise könnte die Antriebseinheit extern des Gehäuses angeordnet sein.

Besonders vorteilhaft ist es jedoch, wenn die Antriebseinheit zum Bewegen der Schutzabdeckung zwischen der aktiven und der inaktiven Stellung in dem Gehäuse angeordnet ist und somit über die Steuerung der Bildaufnahmeeinheit auch ansteuerbar ist.

Da die optisch transparenten Fenster das Problem haben, dass sich auf diesen Verunreinigungen, beispielsweise Späne oder Tropfen von Kühlschmierstoff absetzen, ist bei einer vorteilhaften Lösung der Erfindung vorgesehen, dass das Gehäuse mit einer Ausbringeinrichtung für ein Freihaltemedium für das mindestens eine Fenster versehen ist.

Eine derartige Ausbringeinrichtung hat den Vorteil, dass diese die Möglichkeit eröffnet, das Freihaltemedium, d.h. entweder eine Reinigungsflüssigkeit oder ein gasförmiges Reinigungsmedium oder ein gasförmiges Sperrmedium, auf die Fenster aufzubringen und damit die Fenster zu reinigen.

Bei einer Ausführungsform der Bildaufnahmeeinheit ist vorzugsweise vorgesehen, dass das Gehäuse mit mehreren Fenstern versehen ist. Damit besteht die Möglichkeit, mit ein und derselben Bildaufnahmeeinheit mehrere Objekte zu erfassen.

Beispielsweise ist dabei vorgesehen, dass die Fenster für die Aufnahme eines Bildes eines Objekts im Arbeitsraum mit unterschiedlichen Blickrichtungen vorgesehen sind.

Das heißt, dass mit ein und demselben Gehäuse die Möglichkeit besteht, durch unterschiedliche Blickrichtungen unterschiedliche Objekte im Arbeitsraum als Bilder zu erfassen, ohne dass dabei das Gehäuse selbst noch zusätzlich bewegt werden muss.

Die unterschiedlichen Blickrichtungen können vorzugsweise so zu einander verlaufen, dass einige der unterschiedlichen Blickrichtungen quer zueinander ausgerichtet sind.

Eine weitere vorteilhafte Lösung sieht vor, dass einige der unterschiedlichen Blickrichtungen entgegengesetzt zueinander ausgerichtet sind.

Grundsätzlich besteht in einem derartigen Gehäuse die Möglichkeit, jedem der Fenster eine Bilderfassungseinheit zuzuordnen, so dass gleichzeitig oder unmittelbar in den unterschiedlichen Blickrichtungen jeweils ein Bild eines Objekts aufgenommen werden kann.

Eine andere vorteilhafte Lösung sieht vor, dass eine der Bilderfassungseinheiten durch unterschiedlichen Einbau in das Gehäuse unterschiedlichen Fenstern zugeordnet werden kann.

Das heißt, dass hiermit eine Lösung realisiert werden kann, bei welcher ein und dasselbe Gehäuse bereits mehrere Fenster aufweist, jedoch in dem Gehäuse eine oder zwei Bilderfassungseinheiten vorgesehen sind, die dann jeweils so in das Gehäuse eingebaut werden, dass in der dem jeweiligen Fenster zugeordneten Blickrichtung die Erfassung eines Bildes eines Objekts möglich ist, die für den jeweiligen Anwendungsfall notwendig und wünschenswert sind.

Im Zusammenhang mit der Ausleuchtung des Objekts wurden bislang keine näheren Angaben gemacht.

So wäre es beispielsweise denkbar, den Arbeitsraum auszuleuchten, so dass stets ein ausreichend hell beleuchtetes Objekt für die Erfassung eines Bildes zur Verfügung steht.

Eine zweckmäßige Lösung sieht jedoch vor, dass der Bilderfassungseinheit eine Objektausleuchtungseinheit zugeordnet ist.

Mit einer derartigen Objektausleuchtungseinheit besteht mindestens dann, wenn keine ausreichende Helligkeit am Ort des Objekts vorhanden ist, die Möglichkeit das Objekt zusätzlich und somit mit ausreichender Helligkeit auszuleuchten.

Eine Möglichkeit, die eine besonders genaue Erfassung des Objekts vorsieht, ist ein Durchlichtverfahren, bei dem das Objekt zur Erfassung zwischen der Objektausleuchtungseinheit und der Bilderfassungseinheit angeordnet ist und somit die Bilderfassungseinheit das eine Kontur des Objekts passierende Licht erfasst und folglich das Objekt als Schattenkontur erfasst wird.

Eine andere Möglichkeit der Objektausleuchtung ist ein Auflichtverfahren, bei welchem das Objekt auf der der Bilderfassungseinheit zugewandten Seite angeleuchtet wird.

Prinzipiell könnte die Objektausleuchtungseinheit für ein Auflichtverfahren und/oder ein Durchlichtverfahren an der Bildaufnahmeeinheit an geeigneter Stelle angeordnet sein.

Geometrisch günstig ist es jedoch, wenn die Objektausleuchtungseinheit an der Bilderfassungseinheit angeordnet ist.

Eine besonders günstige Lösung sieht ferner vor, dass die Objektausleuchtungseinheit in dem Gehäuse angeordnet ist, so dass die Objektausleuchtungseinheit in gleicher Weise wie die Bilderfassungseinheit durch das Gehäuse geschützt ist.

Hinsichtlich der Übertragung der Daten zu der Empfangseinheit wurden bislang keine näheren Angaben gemacht.

So sieht eine Möglichkeit vor, dass die Übertragungseinheit die Daten über eine Leitungsgebundene Kommunikationsstrecke zu der Empfangseinheit überträgt.

Alternativ dazu ist vorgesehen, dass die Übertragungseinheit die Daten über eine drahtlose Kommunikationsstrecke zu der Empfangseinheit überträgt.

Die Empfangseinheit wurde ebenfalls im Zusammenhang mit der bisherigen Erläuterung der einzelnen Ausführungsformen des erfindungsgemäßen Assistenzsystems nicht näher spezifiziert.

In einem Fall erfolgt eine Bildauswertung bereits in einer der Übertragungseinheit zugeordneten Bildauswerteeinheit und die übertragenen Daten repräsentieren die durch die Bildauswertung erhaltenen Teilergebnisse oder Ergebnisse.

In einem anderen Fall überträgt die Übertragungseinheit als Daten die Bildsignale oder Bilddaten, so dass das Bild selbst in der Erfassungseinheit zur Verfügung steht und gegebenenfalls dann von einer Bildauswerteeinheit ausgewertet werden kann.

In zuletzt genannten Fall sieht eine vorteilhafte Lösung vor, dass der Empfangseinheit eine Visualisierungseinheit zugeordnet ist, auf welcher das Bild des Objekts darstellbar ist, so dass eine Bedienungsperson das erfasste Objekt über das Bild erkennen und identifizieren kann und hieraus die erforderlichen Informationen und Schlüsse ziehen kann.

Eine weitere vorteilhafte Ausführungsform sieht vor, dass der Übertragungseinheit und/oder der Empfangseinheit eine Bildauswerteeinheit zugeordnet ist.

Eine derartige Bildauswerteeinheit schafft die Möglichkeit, das Bild ohne Mitwirkung oder zumindest nur unter teilweiser Mitwirkung einer Bedienungsperson auszuwerten.

Besonders günstig ist es hierbei, wenn die Bildauswerteinheit selbstständig Bilder erkennt und entsprechend den erkannten Bildern selbsttätig Informationen erzeugt. Die erzeugten Informationen können dabei Informationen darüber sein, ob das Bild als solches erkannt oder als welches Bild dieses Bild erkannt wird.

Um Bilder zu erkennen ist vorzugsweise der Bildauswerteeinheit eine Bilderkennungseinheit zugeordnet.

Eine derartige Bilderkennungseinheit arbeitet beispielsweise so, dass dieser ein Referenzbildspeicher zugeordnet ist, in welchem Referenzbilddaten von Referenzbildern gespeichert sind und dass die Bilderkennungseinheit die Bilder mit den Referenzbildern vergleicht. Damit besteht die Möglichkeit, dass die Bildauswerteeinheit in der Lage ist, Bilder ohne Mitwirkung einer Bedienungsperson zu erkennen.

In diesem Fall ist es dabei von Vorteil, wenn die Bilderkennungseinheit entsprechend der Übereinstimmung des Bildes mit einem der gespeicherten Referenzbilder ein Signal erzeugt, d.h., dass die Bilderkennungseinheit entweder bei Übereinstimmung oder bei Nichtübereinstimmung oder in beiden Fällen ein Signal erzeugt, beispielsweise in Form einer auf einer am Bildschirm dargestellten Meldung.

Im Zusammenhang mit der bisherigen Erläuterung der einzelnen Ausführungsformen des erfindungsgemäßen Assistenzsystems wurde nichts darüber ausgeführt, wie ein derartiges optisches Assistenzsystem gesteuert wird.

Eine vorteilhafte Lösung sieht hierbei vor, dass in dem Gehäuse der Bildaufnahmeeinheit eine interne Funktionssteuerungseinheit vorgesehen ist, mit welcher die Bildaufnahmeeinheit steuerbar ist. Dabei sind alle möglichen Funktionen der Bildaufnahmeeinheit durch die interne Funktionssteuerungseinheit steuerbar.

Eine Lösung sieht hierbei vor, dass die interne Funktionssteuerungseinheit die Bilderfassungseinheit steuert.

Ein derartiges Steuern der Bilderfassungseinheit bedeutet beispielsweise ein Aktivieren der Bilderfassungseinheit, ein Scharfstellen der Abbildungsoptik der Bilderfassungseinheit oder andere Funktionen der Bilderfassungseinheit.

Weiterhin ist es möglich, dass die interne Funktionssteuerungseinheit die Bildauswerteeinheit steuert.

Darüber hinaus sieht eine vorteilhafte Lösung vor, dass die interne Funktionssteuerungseinheit Schutzfunktionen der Bildaufnahmeeinheit steuert.

Derartige Schutzfunktionen können unterschiedlichster Art sein.

So sieht eine vorteilhafte Lösung vor, dass die interne Funktionssteuerungseinheit eine Schutzabdeckung für ein Fenster steuert.

Eine derartige Schutzabdeckung ist beispielsweise durch eine Antriebseinheit antreibbar, so dass die Funktionssteuerungseinheit die Antriebseinheit für die Schutzabdeckung steuert.

Eine andere Lösung sieht vor, dass die interne Funktionssteuerungseinheit eine Beaufschlagung eines Fensters mit einem Freihaltemedium steuert.

Wie bereits dargelegt, besteht bei den optischen transparenten Fenstern die Gefahr, dass diese verschmutzen, so dass eine Beaufschlagung des Fensters entweder während der Erfassung des Objekts oder vor einer Erfassung eines Objekts mit einem Reinigungsmedium erforderlich ist.

Aus diesem Grund ist vorgesehen, dass die interne Funktionssteuerungseinheit eine Beaufschlagung des Fensters mit dem Reinigungsmedium für dieses steuert.

Eine weitere Schutzfunktion ist beispielsweise die Erfassung von Zustandsdaten der Bildaufnahmeeinheit, so dass die interne Funktionssteuerungseinheit Zustandsdaten, wie beispielsweise Temperatur, der Bildaufnahmeeinheit überwacht und gegebenenfalls bei einer drohenden Beschädigung eine Abschaltung herbeiführt.

Eine weitere vorteilhafte Lösung sieht vor, dass die interne Funktionssteuerungseinheit eine Bilderfassung durch unterschiedliche Bilderfassungseinheiten derselben Bildaufnahmeeinheit steuert.

Das heißt, dass die interne Funktionssteuerungseinheit beispielsweise einen oder mehrere Bildsensoren aktiviert oder deaktiviert oder auch die von den Bildsensoren erfassten Bilder hinsichtlich ihrer Übertragung zu der Empfangseinheit in ihrer Reihenfolge ordnet.

Eine andere vorteilhafte Funktion der internen Funktionssteuerungseinheit sieht vor, dass diese eine Beleuchtung eines abzubildenden Objekts mittels der Objektausleuchtungseinheit steuert.

Besonders günstig ist es, wenn die interne Funktionssteuerungseinheit die Energieversorgung der Bildaufnahmeeinheit steuert.

Prinzipiell könnte die interne Funktionssteuerungseinheit selbstständig arbeiten und lediglich entsprechend bereits vorgegebenen Funktionsabläufen innerhalb der Bildaufnahmeeinheit die einzelnen Funktionen steuern.

Eine besonders vorteilhafte Lösung sieht jedoch vor, dass die interne Funktionssteuerungseinheit mit einer externen Funktionseinheit wechselwirkt. Die externe Funktionseinheit kann dabei mit der internen Funktionssteuerungseinheit auf unterschiedlichste Art und Weise kommunizieren.

Eine Möglichkeit sieht vor, dass die interne Funktionssteuerungseinheit mit der externen Funktionseinheit über eine leitungsgebundene Kommunikationsstrecke kommuniziert.

Eine andere Möglichkeit sieht vor, dass die interne Funktionssteuerungseinheit mit der externen Funktionseinheit über eine drahtlose Kommunikationsstrecke kommuniziert.

Die externe Funktionseinheit kann dabei im einfachsten Fall so ausgebildet sein, dass sie mit einer Visualisierungseinheit zusammenwirkt und somit die Funktionen, die die interne Funktionssteuerungseinheit durchführt, anzeigt, wobei eine derartige Anzeige aktuell zeitsynchron erfolgen kann oder auch mit Zeitverzögerung.

Des Weiteren sieht eine vorteilhafte Ausführungsform eines erfindungsgemäßen optischen Assistenzsystems vor, dass die interne Funktionssteuerungseinheit der externen Funktionseinheit Informationen über die in der Bildaufnahmeeinheit zur Verfügung stehende Energie übermittelt.

Eine derartige Information ist insoweit von Bedeutung, als sichergestellt werden sollte, dass ständig genügend elektrische Energie für die Funktion der Bildaufnahmeeinheit vorhanden ist.

Mit der der externen Funktionseinheit übermittelten Informationen besteht somit die Möglichkeit für eine Bedienungsperson, rechtzeitig einzugreifen und für die zur Verfügungsstellung weiterer Energie zu sorgen.

Beispielsweise ist es auch dadurch möglich, dass der externe mechanische Antrieb für einen Generator in der Bildaufnahmeeinheit aktiviert wird.

Die externe Funktionseinheit kann bei einer weiteren Ausführungsform des erfindungsgemäßen optischen Assistenzsystems aber auch so ausgeführt werden, dass diese eine Funktionssteuerungseinheit ist.

Mit einer derartigen Funktionssteuerungseinheit besteht somit die Möglichkeit, im Zusammenwirken mit der internen Funktionssteuerungseinheit die einzelnen Funktionen der Bildaufnahmeeinheit zu steuern.

Beispielsweise besteht mit einer externen Funktionssteuerungseinheit die Möglichkeit, auf die interne Funktionssteuerungseinheit im Hinblick auf die Durchführung einzelner Funktionen einzuwirken.

Eine besonders vorteilhafte Weiterbildung einer externen Funktionssteuerungseinheit sieht vor, dass diese mit der Maschinensteuerung der Werkzeugmaschine kommuniziert, so dass über die externe Funktionssteuerungseinheit die Maschinensteuerung in der Lage ist, einzelne Funktionen der Bildaufnahmeeinheit zu aktivieren oder zu deaktivieren oder auch einzelne Funktionen der Bildauswerteeinheit zu aktivieren oder zu deaktivieren.

Weitere Merkmale und Vorteile der erfindungsgemäßen Lösung sind Gegenstand der nachfolgenden Beschreibung sowie der zeichnerischen Darstellung einiger Ausführungsformen der erfindungsgemäßen Lösung; in der Zeichnungen zeigen:
- Fig. 1: eine schematische Darstellung einer Werkzeugmaschine mit einem erfindungsgemäßen Assistenzsystem;
- Fig. 2: eine schematische Darstellung eines Grundschemas eines erfindungsgemäßen Assistenzsystems;
- Fig. 3: eine schematische Darstellung der einzelnen Elemente einer erfin- dungsgemäßen Bilderfassungseinheit;
- Fig. 4: eine schematische Darstellung einer ersten Ausführungsform einer erfindungsgemäßen Bildaufnahmeeinheit;
- Fig. 5: eine erste Variante der in Fig. 4 dargestellten ersten Ausführungs- form;
- Fig. 6: eine zweite Variante der in Fig. 4 dargestellten ersten Ausführungsform;
- Fig. 7: eine zweite Ausführungsform einer erfindungsgemäßen Bild- aufnahmeeinheit zur Montage an einem Werkzeugträger anstelle eines Werkzeugs;
- Fig. 8: einen Schnitt längs Linie 8-8 in Fig. 10;
- Fig. 9: einen Schnitt längs Linie 9-9 in Fig. 8;
- Fig. 10: eine Draufsicht in Richtung des Pfeils X in Fig. 8;
- Fig. 11: eine ausschnittsweise perspektivische Darstellung einer Einsatz- möglichkeit der ersten Ausführungsform der Bildaufnahmeeinheit;
- Fig. 12: eine schematische Darstellung einer ersten Einsatzmöglichkeit der zweiten Ausführungsform der erfindungsgemäßen Bildaufnahme- einheit;
- Fig. 13: eine schematische Darstellung einer zweiten Einsatzmöglichkeit der zweiten Ausführungsform der erfindungsgemäßen Bildaufnahme- einheit;

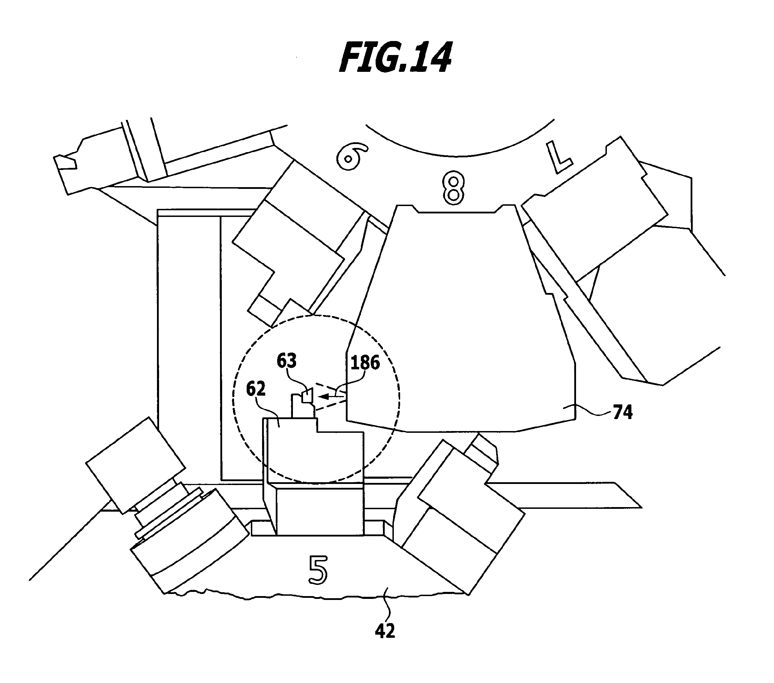

- Fig. 14: eine schematische Darstellung einer dritten Einsatzmöglichkeit der zweiten Ausführungsform der erfindungsgemäßen Bildaufnahme- einheit;
- Fig. 15: eine schematische Darstellung eines Vergleichs eines Bildes mit einem Referenzbild, durchgeführt von einer erfindungsgemäßen Bilderkennungseinheit;
- Fig. 16: eine vierte Einsatzmöglichkeit der zweiten Ausführungsform der erfindungsgemäßen Bildaufnahmeeinheit;

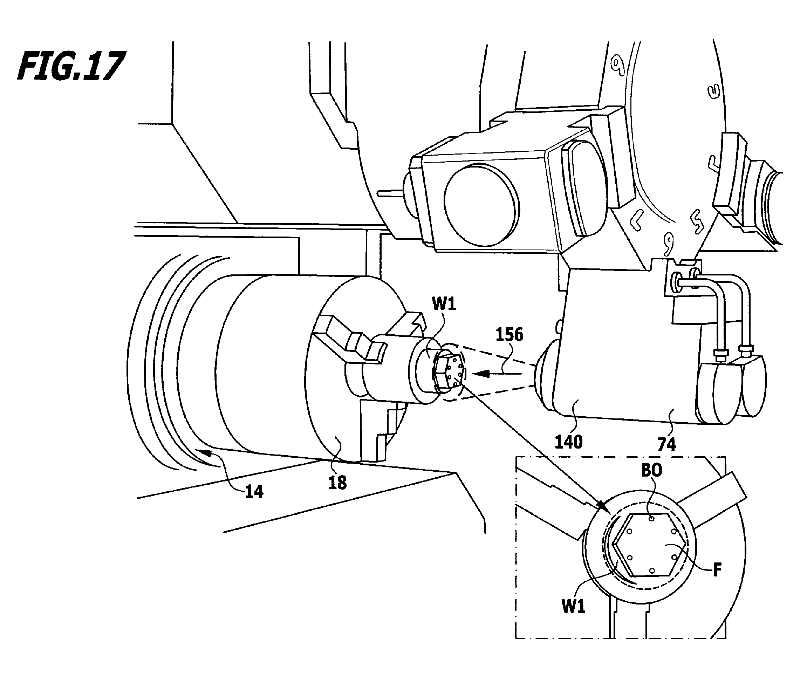

- Fig. 17: eine fünfte Einsatzmöglichkeit der zweiten Ausführungsform der erfindungsgemäßen Bildaufnahmeeinheit;
- Fig. 18: einen Schnitt ähnlich Fig. 9 durch eine dritte Ausführungsform einer erfindungsgemäßen Bildaufnahmeeinheit und
- Fig. 19: eine Darstellung einer Erfassung einer Kontur des Werkstücks mit der dritten Ausführungsform der Bildaufnahmeeinheit gemäß Fig. 18.

Ein Ausführungsbeispiel einer erfindungsgemäß verwendeten Werkzeugmaschine, als Ganzes mit 10 bezeichnet, umfasst ein Maschinengestell 12, an welchem beispielsweise eine erste Werkstückspindeleinheit 14 mit einer um eine erste Werkstückspindelachse 16 drehbar antreibbaren ersten Werkstückspindel 18 angeordnet ist sowie eine zweite Werkstückspindeleinheit 20 um eine zweite Werkstückspindelachse 22 drehbaren zweiten Werkstückspindel 24.

Ferner ist beispielsweise der ersten Werkstückspindeleinheit 14 ein als Ganzes mit 30 bezeichneter erster Werkzeugträger zugeordnet, welcher beispielsweise als Werkzeugrevolver ausgebildet ist und einen ersten Werkzeugrevolverkopf 32 aufweist, der um eine Revolverachse 34 relativ zu einem ersten Werkzeugrevolvergehäuse 36 drehbar ist. Außerdem ist ein zweiter Werkzeugträger 40 vorgesehen, welcher ebenfalls beispielsweise als Werkzeugrevolver ausgebildet ist und einen zweiten Werkzeugrevolverkopf 42 aufweist, welcher um eine zweite Werkzeugrevolverachse 44 relativ zu einem zweiten Werkzeugrevolvergehäuse 46 drehbar ist.

Beispielsweise sind dabei beide Werkzeugträger 30, 40 mindestens in einer X-Richtung und Z-Richtung relativ zu den Werkstückspindeleinheiten 14, 20 bewegbar und vorzugsweise ist außerdem mindestens eine der Werkstückspindeleinheiten 14 oder 20 beispielsweise noch zusätzlich in Z-Richtung, d.h. parallel zu ihrer jeweiligen Werkstückspindelachse 16 oder 22 bewegbar, um eine Rückseitenbearbeitung eines Werkstücks durchführen zu können.

Die Steuerung der Bewegungen der Werkzeugträger 30 und 40 sowie die Ansteuerung der Werkstückspindeleinheiten 14 und 20 erfolgt über eine als Ganzes mit 50 bezeichnete Maschinensteuerung, die beispielsweise als programmierbare Steuerung, insbesondere als NC-Steuerung, ausgebildet ist.

Mit der erfindungsgemäßen Werkzeugmaschine sind somit in der ersten Werkstückspindeleinheit 14 und in der zweiten Werkstückspindeleinheit 20 aufgenommene Werkstücke W1 bzw. W2 bearbeitbar, wobei beispielsweise auch bei einer Bewegbarkeit einer der Werkstückspindeleinheiten 14 oder 20 in Z-Richtung eine Übergabe der Werkstücke zwischen den Werkstückspindeleinheiten 14 und 20 zur Rückseitenbearbeitung möglich ist.

Die Bearbeitung der Werkstücke W1 und W2 erfolgt über in die Werkzeugrevolverköpfe 32 bzw. 42 einsetzbare Werkzeuge 60 bzw. 62, wobei durch Drehen der Werkzeugrevolverköpfe 32 bzw. 42 ein Wechsel des jeweils einzusetzenden Werkzeugs 60 bzw. 62 möglich ist.

Zur Bearbeitung der Werkstücke W1 bzw. W2 erfolgt die Relativbewegung derselben zu den Werkzeugen 60 und 62 jeweils innerhalb eines Arbeitsraums 64 der Werkzeugmaschine, wobei gegebenenfalls auch noch bei der Bearbeitung der Werkstücke W1 und W2 eine Zufuhr von Kühlschmierstoff 66, beispielsweise in Form einer Kühlschmierstoffemulsion, während der Bearbeitung der Werkstücke W1 und W2 innerhalb des Arbeitsraums 64 erfolgt.

Eine direkte Beobachtung von Programmiervorgängen, Einrichtungsvorgängen und/oder Bearbeitungsvorgängen im Arbeitsraum 64 ist bei komplex aufgebauten Werkzeugmaschinen 10 seitens der Bedienungsperson nur in Ausnahmefällen mit einfachen Mitteln möglich.

Aus diesem Grund besteht der Wunsch, die Vorgänge im Arbeitsraum 64 besser beobachten zu können, um sowohl Programmier-, Einrichte- und Bearbeitungsvorgänge zu vereinfachen und/oder zu erleichtern.

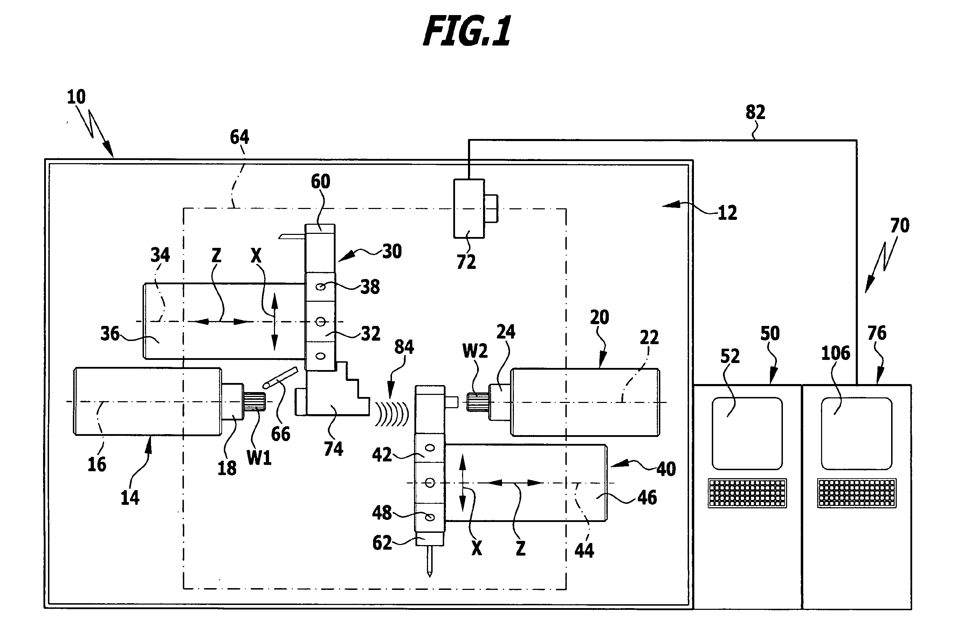

Hierzu ist der in Fig. 1 dargestellten Werkzeugmaschine ein optisches Assistenzsystem 70 zugeordnet, welches in dem Arbeitsraum 64 der Werkzeugmaschine 10 flexibel positionierbare Bildaufnahmeeinheiten 72 und 74 aufweist, die mit einer außerhalb des Arbeitsraums 64 angeordneten Empfangseinheit 76 in Wechselwirkung stehen.

Dabei ist beispielsweise die Bildaufnahmeeinheit 72 mittels einer leitungsgebundenen Kommunikationsstrecke 82 mit der Empfangseinheit 76 verbunden, während die Bildaufnahmeeinheit 74 über eine drahtlose Kommunikationsstrecke 84 mit der Empfangseinheit 76 verbunden ist.

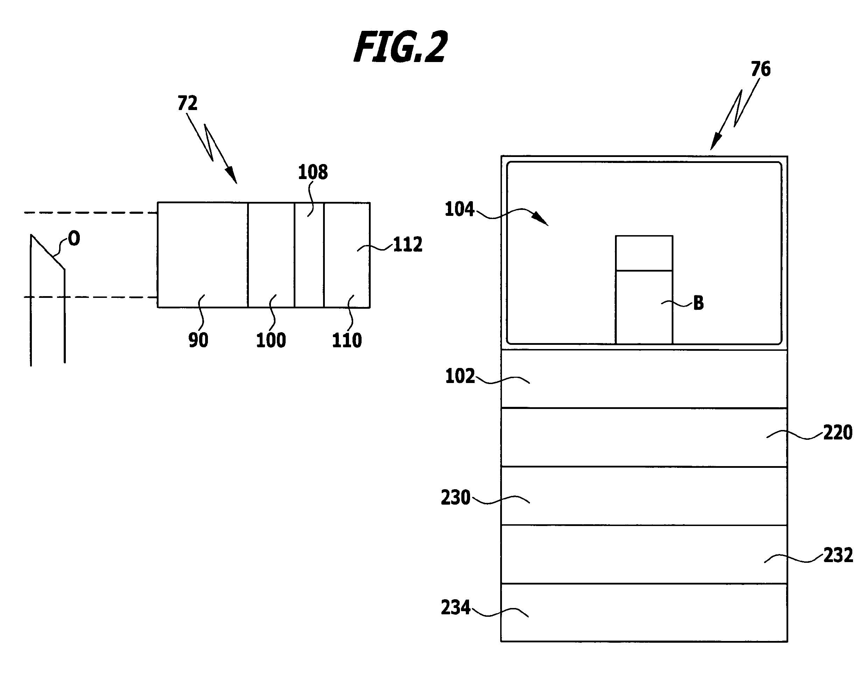

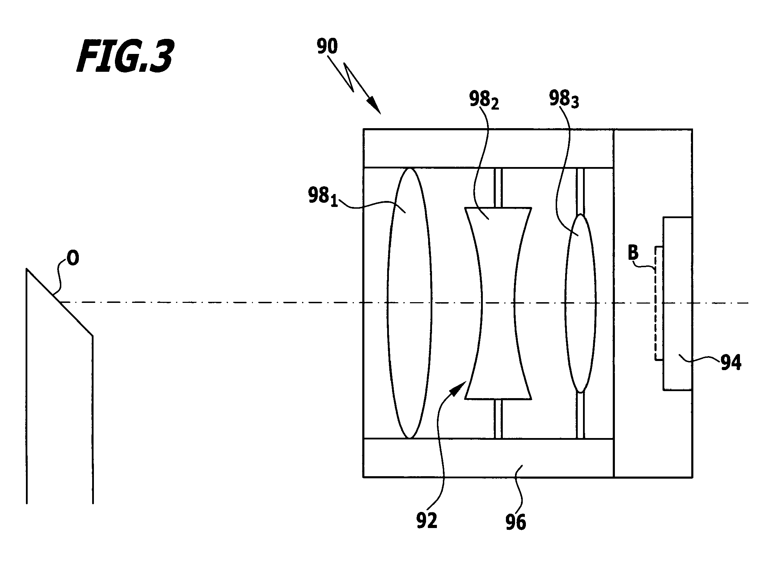

Es ist aber auch denkbar, alle Kommunikationsstrecken drahtlos anzuführen. Wie in Fig. 2 schematisch dargestellt, umfasst jede Bildaufnahmeeinheit, beispielsweise die Bildaufnahmeeinheit 72, eine Bilderfassungseinheit 90, welche wie in Fig. 3 im Detail dargestellt, eine Abbildungsoptik 92 umfasst, welche ein Bild auf einen Bildsensor 94 abbildet, wobei die Abbildungsoptik 92 durch eine Einstellvorrichtung 96, welche beispielsweise die einzelnen optischen Elemente 98₁, 98₂ und 98₃ fixiert, hinsichtlich ihrer Abbildungseigenschaften, d.h. einer Scharfstellung des Bildes B auf dem Bildsensor 94, mittels der Einstelleinrichtung 96 einstellbar ist.

Der Bildsensor 94 erzeugt dabei Bildsignale, welche von einer Übertragungseinheit 100 verarbeitet und als Daten über die jeweilige Kommunikationsstrecke 82 oder 84 zu einer Empfangseinheit 102 der Bildverarbeitungseinheit 76 übertragen werden.

Im dargestellten Fall werden die Bildsignale in Form von Bilddaten so zur Empfangseinheit 102 übertragen, dass in dieser das vollständige Bild des Objekts O vorliegt.

Die Empfangseinheit 102 in der Bildverarbeitungseinheit 76 ist nunmehr in der Lage, beispielsweise über eine Visualisierungseinheit 104, das von dem Bildsensor 94 erfasste Bild B des Objekts O auf einem Bildschirm 106 der Visualisierungseinheit darzustellen, wobei der Bildschirm 106 entweder ein eigener Bildschirm der Bildverarbeitungseinheit 76 sein kann, es ist aber genauso möglich, als Bildschirm einen Bildschirm 52 der Maschinensteuerung 50 einzusetzen.

Außerdem umfasst die Bildaufnahmeeinheit 72 noch eine als Ganzes mit 110 bezeichnete Energieversorgungseinheit 110, welche im einfachsten Fall einen Speicher 112 für elektrische Energie aufweist, wobei der Speicher für elektrische Energie 112 entweder ein Akkumulator oder ein Kondensator ist.

Zur Steuerung der Funktionen der Bildaufnahmeeinheit 72 ist außerdem noch eine interne Funktionssteuerungseinheit 108 vorgesehen, welche die Funktionen der Bilderfassungseinheit 90, der Übertragungseinheit 100 sowie der Energieversorgungseinheit 110 steuert und koordiniert.

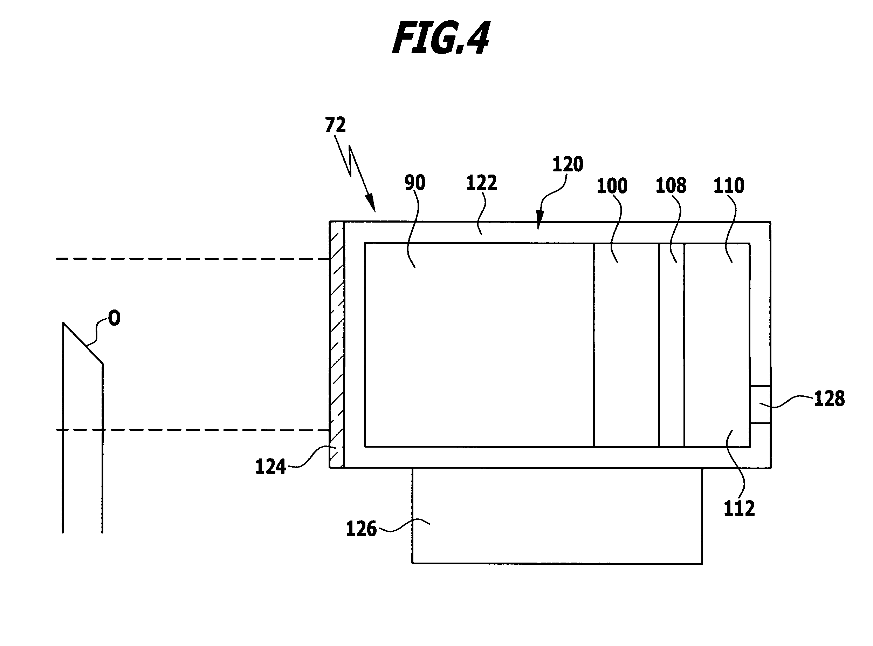

Wie in Fig. 4 im Detail dargestellt, umfasst die Bildaufnahmeeinheit 72 ein Gehäuse 120, welches einen Gehäusemantel 122 aufweist, der mit einem optisch transparenten Fenster 124 versehen ist und der außerdem auf einem Montageelement 126 sitzt, das seinerseits an der Werkzeugmaschine im Arbeitsraum 64 montierbar ist.

Beispielsweise kann dabei das Montageelement 126 ein Magnetsockel sein oder ein an dem Maschinengestell 12 beispielsweise mittels einer Schraubverbindung fixierbarer Sockel sein, so dass eine Fixierung des Gehäuses 120 an verschiedenen Stellen im Arbeitsraum 64 möglich ist.

Ferner ist der Gehäusemantel 122 mitsamt dem Fenster 124 vorzugsweise mediendicht ausgebildet, so dass die in dem Gehäusemantel 122 angeordnete Bilderfassungseinheit 90 sowie die Übertragungseinheit 100, die Funktionssteuerungseinheit 108 als auch die Energieversorgungseinheit 110 mediendicht gegenüber der Umgebung im Arbeitsraum 64 abgeschlossen und somit geschützt sind.

Für den Fall, dass die Energieversorgungseinheit 110 lediglich den Speicher 112 für elektrische Energie umfasst, ist vorzugsweise in dem Gehäusemantel 122 noch ein Anschlusselement 128 vorgesehen, mit welchem dem Speicher für elektrische Energie 112 externe elektrische Energie entweder galvanisch oder induktiv oder kapazitiv zugeführt werden kann.

Dieses Anschlusselement 128 kann somit entweder ein über galvanische Kontakte verbindbares Anschlusselement 100 sein oder ein Anschlusselement 128 zur berührungslosen, beispielsweise induktiven oder kapazitiven Übertragung von elektrischer Energie zu dem Speicher 112 für elektrische Energie sein.

Durch das in dem Gehäuse 120 vorgesehene und optisch transparente Fenster 124 besteht nun die Möglichkeit, mittels der Bilderfassungseinheit 90 das Bild des Objekts O in der beschriebenen Weise zu erfassen, wobei allerdings die Bilderfassungseinheit 90 sowie die Übertragungseinheit 100 und die Energieversorgungseinheit 110 durch das Gehäuse 120 geschützt im Arbeitsraum 64 eingesetzt werden können.

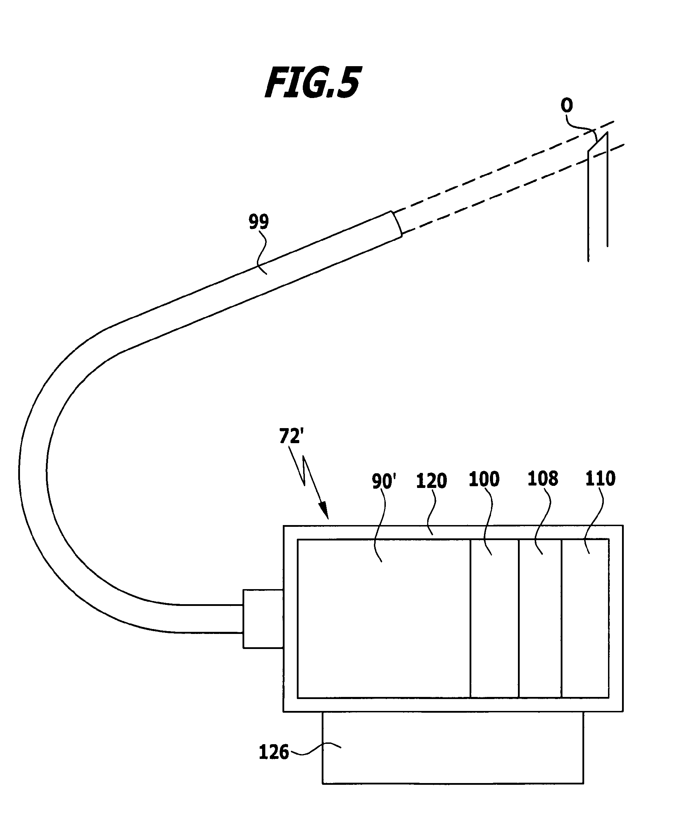

Bei einer Variante der Bildaufnahmeeinheit 72', dargestellt in Fig. 5, ist die Bilderfassungseinheit 90' insoweit gegenüber der Bilderfassungseinheit 90 modifiziert, dass diese nicht das Objekt direkt erfasst, sondern über einen Lichtleiter 99, welcher es erlaubt, Objekte O an schwer zugänglichen Stellen des Arbeitsraums 64 zu beobachten und zu erfassen.

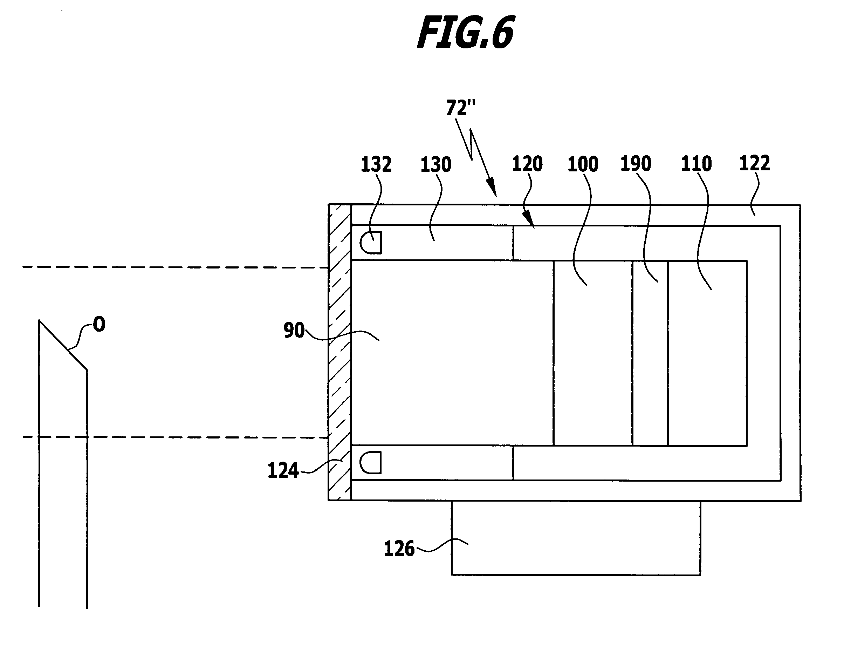

Bei einer zweiten Variante der Bildaufnahmeeinheit 72", dargestellt in Fig. 6, sind im Prinzip dieselben Elemente der Bildaufnahmeeinheit 72 vorgesehen, mit dem Unterschied, dass beispielsweise um die Bilderfassungseinheit 90 herum eine Objektausleuchtungseinheit 130 vorgesehen ist, welche es ermöglicht, mit Leuchtelementen, 132, beispielsweise Leuchtdioden, das Objekt O auszuleuchten, um somit ein helleres Bild B zu erhalten, welches sich einfacher von der Bilderfassungseinheit 90 und insbesondere auch konturengenauer von der Bilderfassungseinheit 90 erfassen lässt.

Die Objektausleuchtungseinheit 130 kann beispielsweise als die Bilderfassungseinheit 90 umschließender Ring ausgebildet sein, längs welchem die Leuchtelemente 132 angeordnet sind.

Ferner ist die Objektausleuchtungseinheit 130 vorzugsweise geschützt innerhalb des Gehäuses 120 angeordnet, jedoch zur Kühlung desselben vorzugsweise thermisch mit dem Gehäuse 120 gekoppelt.

Es ist aber auch denkbar, die Objektausleuchtungseinheit 130 an einer Außenseite des Gehäuses 120 oder im Abstand von dieser anzuordnen, um mit der Objektausleuchtungseinheit 130 im Durchlichtverfahren arbeiten zu können.

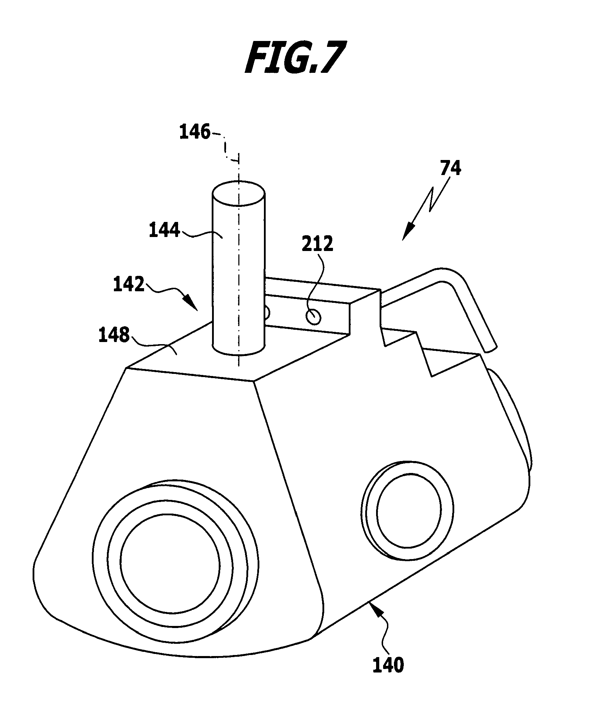

Die Bildaufnahmeeinheit 74, im Detail dargestellt in den Fig. 7 bis 10, ist so ausgebildet, dass diese anstelle eines der Werkzeuge 60 oder 62 in dem ersten Werkzeugträger 30 oder dem zweiten Werkzeugträger 40, insbesondere an dem jeweiligen Revolverkopf 32 und/oder 42, montierbar ist.

Hierzu umfasst ein Gehäuse 140 der Bildaufnahmeeinheit 74 eine den Werkzeugen 62 und/oder 64 sowie Werkzeugaufnahmen 38 bzw. 48 der Werkzeugrevolver 32, 42 angepasste Werkzeugfixierung, welche im dargestellten Ausführungsbeispiel einen Schaft 144 und einen sich senkrecht zu einer Längsachse 146 des Schaftes 144 erstreckende Anlagefläche 148 aufweist, die an einer Außenseite des jeweiligen Werkzeugrevolverkopfes 32 bzw. 42 anlegbar ist, während der Schaft 144 in die jeweilige Aufnahme 38 bzw. 48 einsteckbar und fixierbar ist.

Mit dieser Werkzeugfixierung 142 lässt sich das Gehäuse an jeder Stelle des jeweiligen Werkzeugrevolverkopfes 32 und/oder 42 montieren und durch Drehen des Werkzeugrevolverkopfes 32 und/oder 42 um die jeweilige Werkzeugrevolverachse 34 bzw. 44 sowie Bewegen des gesamten Werkzeugträgers 30 bzw. 40 im Arbeitsraum 64 in der gleichen Weise wie ein eines der Werkzeuge 60 und 62 bewegen.

Damit besteht die Möglichkeit, das Gehäuse 140 in eine Vielzahl von Positionen innerhalb des Arbeitsraums 64 zu bringen, um ein Bild eines Objekts im Arbeitsraum 64 zu erfassen.

Bei dem in den Fig. 7 bis 10 dargestellten Ausführungsbeispiel sind an dem Gehäuse 140 mehrere optisch transparente Fenster vorgesehen, die eine Aufnahme eines Bildes mit verschiedenen Blickrichtungen ermöglichen.

So ist beispielsweise an einer Frontseite 152 des Gehäuses ein optisch transparentes Fenster 154 vorgesehen, welches eine Blickrichtung 156 in Richtung der ersten Werkstückspindeleinheit 18 zulässt, wobei die Blickrichtung 156 ungefähr quer zur Längsachse 146 des Schafts 144 verläuft.

Ferner sind an einer der Vorderseite 152 gegenüberliegenden Rückseite 162 des Gehäuses 140 ebenfalls optisch transparente Fenster, nämlich optisch transparente Fenster 164a und 164b, vorgesehen, welche eine Blickrichtung 166 in Richtung der zweiten Werkstückspindeleinheit 20 ermöglichen. Zusätzlich ist auf einer Unterseite 172 des Gehäuses 40 ein optisch transparentes Fenster 174 vorgesehen, welches eine Blickrichtung 176 ermöglicht, die ungefähr parallel zur Längsachse 146 des Schafts 144 verläuft, jedoch in Richtung einer der Werkzeugfixierung 142 entgegengesetzten Seite.

Schließlich sind noch an den zwischen der Vorderseite 152 und der Rückseite 162 liegenden Längsseiten 182a und 182 b des Gehäuses 140 optisch transparente Fenster 184a und 184b angeordnet, welche Blickrichtungen 186a und 186b quer zur Längsachse 146 des Schaftes 144 zulassen, die jedoch ebenfalls quer zu den Blickrichtungen 156 und 166 bzw. 176 verlaufen.

Mit derart angeordneten optisch transparenten Fenstern 154, 164, 174 und 184 ist die Erfassung von Objekten O auf allen Seiten des Gehäuses 140 möglich, mit Ausnahme der Seite des Gehäuses 140, an welcher die Werkzeugfixierung 142 angeordnet ist.

In Verbindung mit den Möglichkeiten der Positionierung des Gehäuses 140 innerhalb des Arbeitsraums 64 durch Bewegen des jeweiligen Werkzeugträgers 30, 40 und/oder Drehen des jeweiligen Revolverkopfes 32, 42 sind somit vielfältige Möglichkeiten der Bilderfassung im Arbeitsraum gegeben.

Es besteht beispielsweise die Möglichkeit, zur Bilderfassung jedem der optisch transparenten Fenster 154, 164, 174 und 184 eine Bilderfassungseinheit 90 mit dem eingangs beschriebenen Aufbau zuzuordnen, wobei gegebenenfalls der jeweiligen Bilderfassungseinheit 90 noch eine Objektausleuchtungseinheit 130 zugeordnet ist, um eine entsprechend gute Ausleuchtung des jeweils abzubildenden Objekts O zu erhalten.

Es besteht aber auch die Möglichkeit, das Gehäuse 140 mit den gesamten optisch transparenten Fenstern 154, 164, 174 und 184 zu versehen, jedoch nur einem der optisch transparenten Fenster, 154, 164, 174 oder 184 oder mehreren dieser optischen Fenster 154, 164, 174 und 184 eine derartige Bilderfassungseinheit 90 mitsamt einer Objektausleuchtungseinheit 130 zuzuordnen, je nach den gewünschten Anforderungen.

Eine weitere Möglichkeit sieht auch vor, das Gehäuse 140 so auszubilden, dass die optisch transparenten Fenster 154, 164, 174 und 184 eingesetzt werden können, jedoch dann, wenn eine Erfassung eines Objekts in der jeweiligen Blickrichtung 156, 166, 176 und 186 nicht erforderlich ist, dieses Fenster 154, 164, 174 oder 184 mit einem Blinddeckel zu verschließen. Damit lässt sich das Gehäuse 140 je nach erforderlicher Blickrichtung 156, 166, 176 und 186 jeweils so mit Bilderfassungseinheiten 90 und gegebenenfalls Objektausleuchtungseinheiten 130 ausrüsten, dass in der gewünschten Blickrichtung 156, 166, 176 und 186 eine Bilderfassung möglich ist.

Bei diesem Ausführungsbeispiel ist außerdem die bereits hinsichtlich ihrer Funktion beschriebene Übertragungseinheit 100 vorhanden, die allerdings aufgrund des Einsatzes der Bildaufnahmeeinheit 74 an einem der Werkzeugrevolverköpfe 32 oder 42 die Bildsignale über die drahtlose Kommunikationsstrecke 84 zu der Bildverarbeitungseinheit 76 überträgt. Ferner ist bei dieser Bildaufnahmeeinheit 74 ebenfalls eine Energieversorgungseinheit 110' vorgesehen, die neben dem Speicher für elektrische Energie 112 noch einen Generator 114 umfasst.

Dieser Generator 114 lässt sich vorzugsweise mechanisch antreiben, beispielsweise über eine durch den Schaft 144 geführte Antriebswelle 148, welche über ein Kupplungselement 150 an einem dem Gehäuse 140 abgewandten Ende des Schaftes 144 mit einem bekannten Werkzeugantrieb in dem jeweiligen Werkzeugrevolverkopf 32 oder 42 koppelbar ist, sofern der Werkzeugrevolverkopf 32 oder 42 als Werkzeugrevolverkopf für angetriebene Werkzeuge ausgebildet ist.

Bei einer Werkzeugmaschine ist ein derartiger Werkzeugantrieb entweder wahlweise zuschaltbar oder zumindest dann aktiv, wenn das Werkzeug 60 oder 62 in einer bestimmten Schaltstellung des Werkzeugrevolverkopfes 32 bzw. 42 steht.

Über den mechanischen Antrieb des Generators 114 lässt sich somit entweder ständig oder temporär elektrische Energie erzeugen und in dem Speicher 112 für elektrische Energie speichern, so dass die Bildaufnahmeeinheit 74 in der Werkzeugmaschine 10 ständig im Einsatz bleiben kann, ohne dass ein Entnehmen der Bildaufnahmeeinheit 74 aus dem Arbeitsraum 64 zum Aufladen des Speichers 112 für elektrische Energie erforderlich ist.

Durch die Möglichkeit des Antriebs des Generators 114 können auch Einheiten in der Bildaufnahmeeinheit 74 eingesetzt werden, die einen höheren Stromverbrauch haben, also auch beispielsweise mehrere Bilderfassungseinheiten 90 und Objektausleuchtungseinheiten 130 gleichzeitig arbeiten.

Um insbesondere bei mehreren Bilderfassungseinheiten 90 und auch mehreren Objektausleuchtungseinheiten 130, die gleichzeitig im Einsatz sind, eine Steuerung der einzelnen Funktionen durchführen zu können, ist vorzugsweise eine interne Funktionssteuereinheit 190 vorgesehen, welche den Einsatz der verschiedenen Bilderfassungseinheiten 90 und den Einsatz der verschiedenen Objektausleuchtungseinheiten 130 sowie gegebenenfalls auch das Energiemanagement der Energieversorgungseinheit 110' steuert.

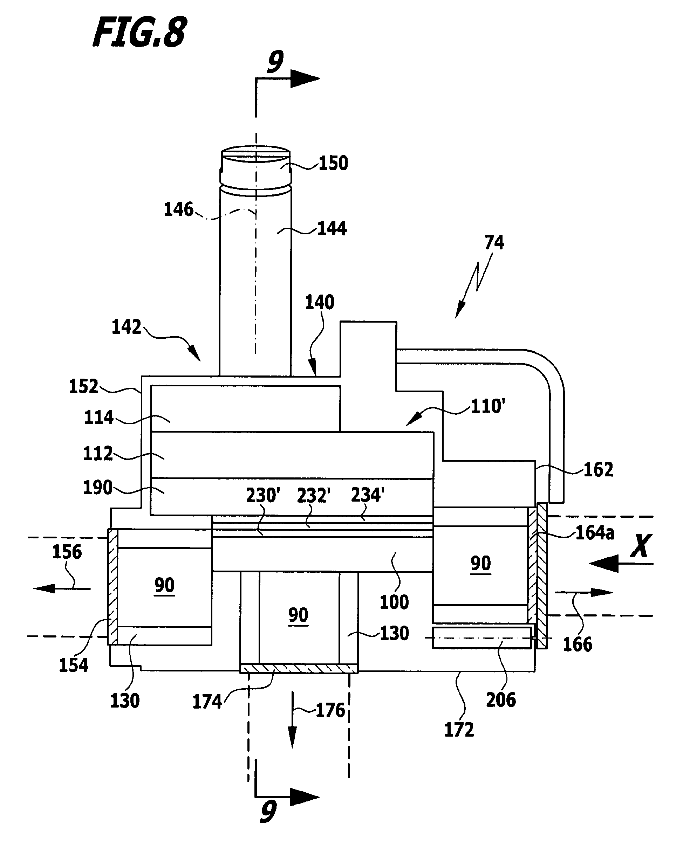

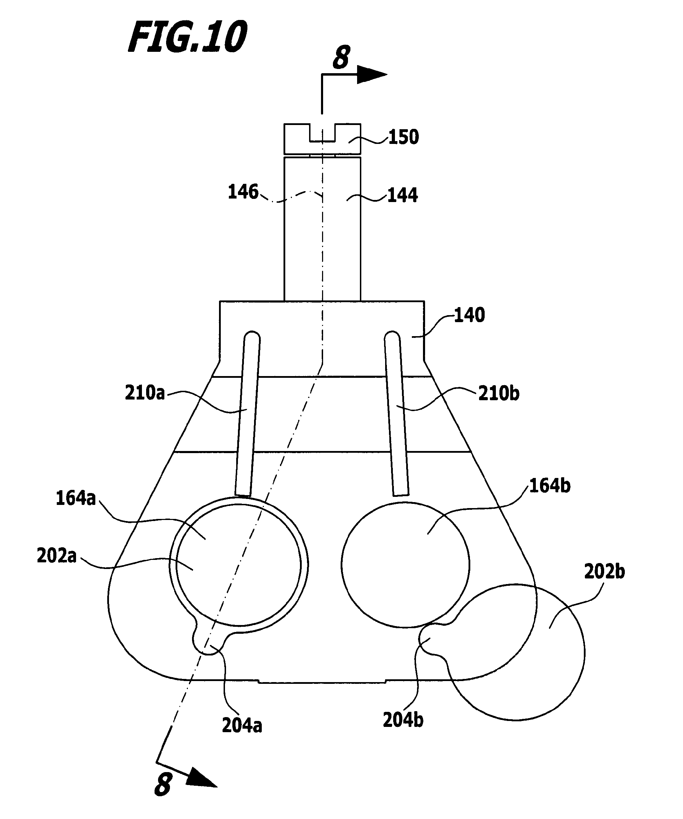

Darüber hinaus ist bei der Bildaufnahmeeinheit 74, wie insbesondere in Fig. 8 und 10 dargestellt, den optisch transparenten Fenstern 164a und 164b eine Abdeckung 202a bzw. 202b zugeordnet, die zum Schutz der optisch transparenten Fenster 164a und 164b in eine Schutzposition vor diese schwenkbar ist, und zum Freigeben der jeweiligen Blickrichtung 166 in eine Freigabeposition schwenkbar ist.

Hierzu ist die jeweilige Schutzabdeckung 202 um eine Schwenkachse 204a bzw. 204b schwenkbar am Gehäuse 140 gelagert, wobei in dem Gehäuse 140 noch ein Schwenkantrieb 206 vorgesehen ist, mit welchem das Schwenken der Schutzabdeckungen 202a, 202b sowie um die Schwenkachsen 204a bzw. 204b möglich ist.

Auch die Ansteuerung dieser Schwenkantriebe 206 erfolgt über die interne Funktionssteuerung 190 unter Einsatz von elektrischer Energie aus der Energieversorgungseinheit 110'.

Die optisch transparenten Fenster 164a und 164b dienen hauptsächlich dazu, während der Bearbeitung eines Werkstücks die Bearbeitung desselben zu beobachten, wobei während dieser Beobachtung der Bearbeitung ein Späneflug vorliegt und außerdem Kühlschmierstoff gesprüht wird, so dass die Schutzabdeckungen 202a und 202b zum Schutz der optisch transparenten Fenster dienen, wenn diese zur Beobachtung der Bearbeitung nicht eingesetzt werden.

Um insbesondere auch bei der Beobachtung der Bearbeitung das Absetzen von Spänen und Kühlschmierstofftropfen auf den optisch transparenten Fenstern 164a und 164b zu verhindern, sind an dem Gehäuse Vorrichtungen zum Ausbringen von Freihaltemedien 210a und 210b, beispielsweise von Reinigungsflüssigkeit oder Luft vorgesehen, welche auf die optisch transparenten Fenster 164a und 164b aufgebracht werden können, um diese von sich absetzenden Spänen oder sich absetzenden Tropfen von Kühlschmierstoff frei zu halten oder ständig zu reinigen und somit eine Bilderfassung auch während des Späneflugs und des Einsatzes von Kühlschmierstoff oder unmittelbar nach Einsatz derselben zu ermöglichen.

Ein derartiges Freihaltemedium wird üblicherweise über den jeweiligen Werkzeugrevolverkopf 32 oder 42 der jeweiligen Werkzeugposition, in welcher die Bildaufnahmeeinheit 74 mit der Werkzeugfixierung 142 sitzt, zugeführt und tritt vom Werkzeugrevolverkopf 32 bzw. 42 über Zufuhröffnungen 212 in die Ausbringeinrichtungen 210a und 210b über.

Die interne Funktionssteuereinheit 190 kann ausschließlich für die Steuerung interner Funktionen der Bildaufnahmeeinheit 74 eingesetzt werden.

Es ist aber auch denkbar, die interne Funktionssteuereinheit 190 so auszubilden, dass sie beispielsweise über die drahtlose Kommunikationsstrecke 84 ebenfalls mit einer externen als Funktionssteuerungseinheit ausgebildete Funktionseinheit 220 in der Bildverarbeitungseinheit 76 (Fig. 2) kommuniziert.

Mit der externen Funktionssteuerungseinheit 220 ist es möglich, der internen Funktionssteuerungseinheit 190 Funktionsanforderungen zu übermitteln, welche von der internen Funktionssteuerungseinheit 190 dann ausgeführt werden.

Ferner ist die externe Funktionssteuerungseinheit 220 vorzugsweise so ausgebildet, dass sie in der Lage ist, mit der Maschinensteuerung 52 zusammenzuarbeiten, insbesondere Programmbefehle der Maschinensteuerung 52 auszuführen, sofern diese das erfindungsgemäße optische Assistenzsystem betreffen.

In diesem Fall ist die externe Funktionssteuerungseinheit 220 beispielsweise mit dem Interpreter der CNC-Steuerung gekoppelt und somit in der Lage, das erfindungsgemäße optische Assistenzsystem betreffende NC-Sätze dadurch von der internen Funktionssteuerungseinheit 190 ausführen zu lassen, dass die entsprechenden Funktionssteuerungsbefehle von der externen Funktionssteuerungseinheit 220 der internen Funktionssteuerungseinheit 190 übermittelt werden.

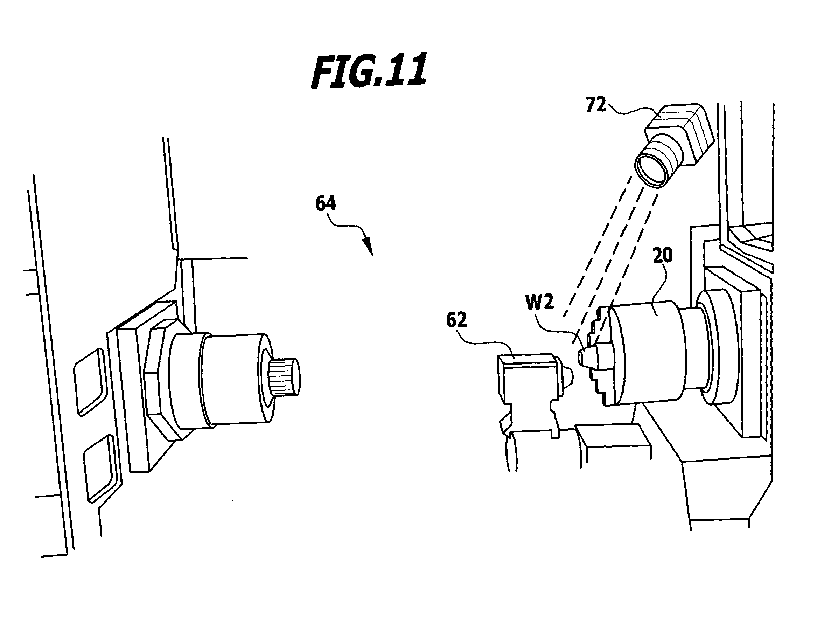

So lässt sich beispielsweise, wie in Fig. 11 dargestellt, die Bildaufnahmeeinheit 72 im Arbeitsraum 64 dazu einsetzen, die Bewegung des Werkzeugs 62 in Richtung des Werkstücks W2 in der zweiten Werkstückspindeleinheit 20 zu verfolgen und so beispielsweise einen Einrichtprozess optisch auf der Visualisierungseinheit 106 darzustellen.

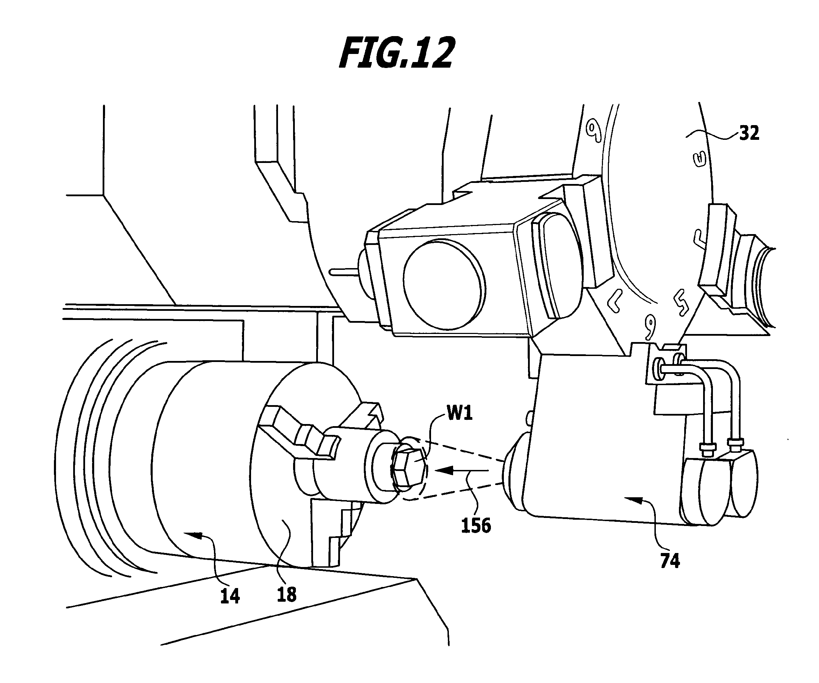

Bei einer anderen Lösung, dargestellt in Fig. 12, wird die Bildaufnahmeeinheit 74, welche in dem ersten Werkzeugrevolverkopf 32 an der Stelle eines Werkzeugs angeordnet ist, dazu eingesetzt, das Werkstück W1 in der ersten Werkstückspindel 18 der ersten Werkstückspindeleinheit 14 zu erkennen, wobei dies durch Beobachtung in der Blickrichtung 156 erfolgt.

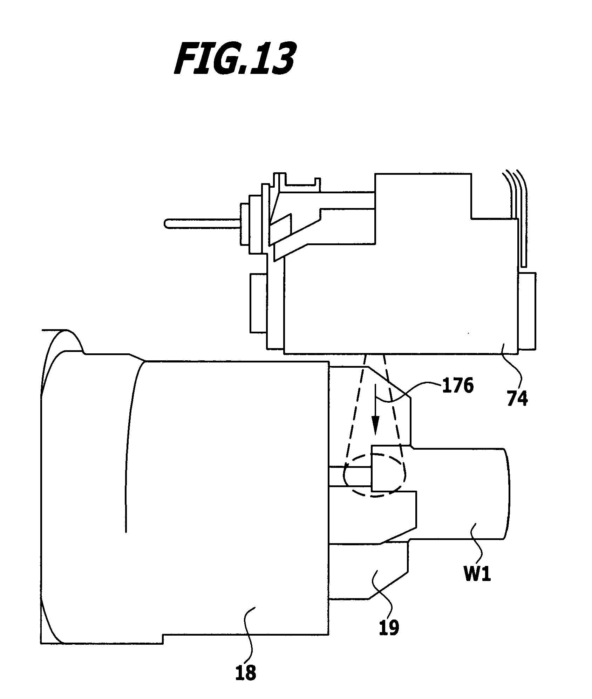

Alternativ oder ergänzend zur Feststellung der Präsenz des Werkstücks W1, erfasst in der Blickrichtung 156, ist es aber auch denkbar, wie in Fig. 13 dargestellt, die Spannung des Werkstücks W1 in der ersten Werkstückspindel 18 dadurch zu kontrollieren, dass die Bildaufnahmeeinheit 74 so verfahren wird, dass diese in der Lage ist, in der Blickrichtung 176 zu überprüfen, wie das Werkstück W1 in Spannbacken 19 der ersten Werkstückspindel 18 sitzt und somit zu überprüfen, ob das Werkstück W1 durch die Spannbacken 19 der ersten Werkstückspindel 18 richtig gespannt ist oder nicht.

Alternativ oder ergänzend zu der Überprüfung, ob das Werkstück W1 in der ersten Werkstückspindel 18 richtig gespannt ist, besteht außerdem noch mit der erfindungsgemäßen Bildaufnahmeeinheit 74 die Möglichkeit, beispielsweise in Blickrichtung 186, eine Schneide 63 des Werkzeugs 62 in dem zweiten Werkzeugrevolverkopf 42 im Hinblick auf einen Bruch zu überprüfen.

Hierzu kann es ausreichend sein, das Bild B der Schneide 63 auf der Visualisierungseinheit 106 für eine Bedienungsperson darzustellen, so dass die Bedienungsperson an dem Bild B der Schneide 63 erkennen kann, ob ein Bruch vorliegt.

Alternativ oder ergänzend dazu ist die Bildverarbeitungseinheit 76 mit einer Bildauswerteeinheit 230 (Fig. 2) versehen, welche das Bild B, welches die Empfangseinheit 102 empfängt, auswerten kann.

Hierzu sind der Bildauswerteeinheit 230 eine Bilderkennungseinheit 232 und ein Referenzbildspeicher 234 zugeordnet, in welchem zu dem jeweiligen Bild B, welches die Empfangseinheit 102 empfängt, Referenzbilder RB hinterlegt sind.

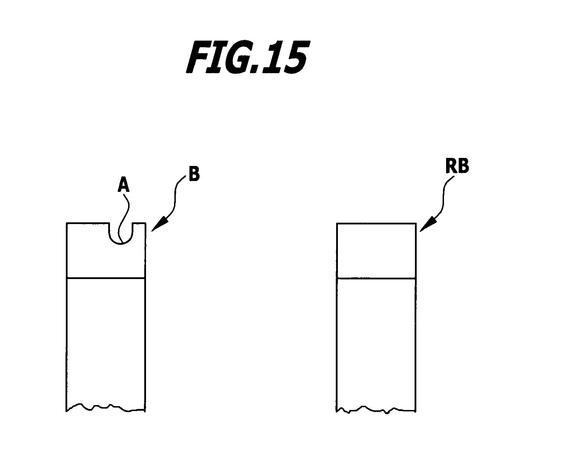

Die Bilderkennungseinheit 232 vergleicht nun, wie schematisch in Fig. 15 dargestellt, das Bild B, welches die Empfangseinheit 102 empfängt, mit dem Referenzbild RB, welches im Referenzbildspeicher 234 abgespeichert. ist.

Sind die Bilder identisch, so meldet dies die Bilderkennungseinheit 232 und die Bildauswerteeinheit 230 zieht hieraus die Schlussfolgerung, dass die Schneide des Werkzeugs 63 in Ordnung ist, zeigt jedoch das Bild B eine ausgebrochene Stelle A, so ist die Bilderkennungseinheit 232 durch Vergleich des Bildes B mit dem Referenzbild RB in der Lage, aufgrund der unterschiedlichen, von dem Bild B ausgefüllten Flächen die Abweichung zu erkennen und meldet diese der Bildauswerteeinheit 230, welche hieraus die Schlussfolgerung zeiht, dass ein Schaden vorliegt, so dass diese beispielsweise eine auf dem Bildschirm 106 oder 52 erscheinende Fehlermeldung erzeugt.

Damit ist die Bildauswerteeinheit 230 in der Lage, selbstständig ein Bild B auszuwerten und somit Abweichungen zu erkennen und zu melden.

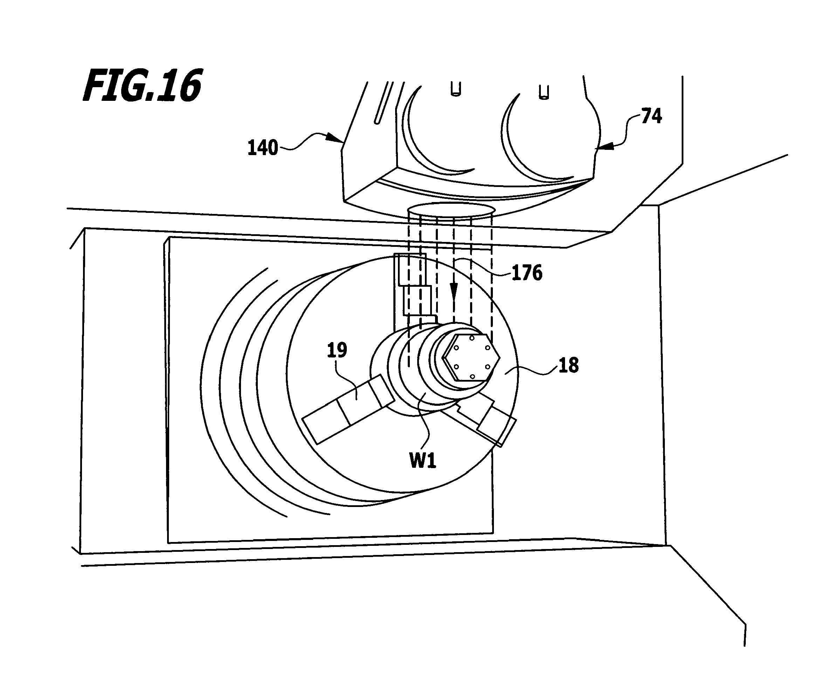

Mit der Bildaufnahmeeinheit 74 ist ferner, wie in Fig. 16 dargestellt, auch ein Vermessen des Werkstücks W1 in der ersten Werkstückspindel 18 möglich, beispielsweise durch Erfassen des Werkstücks W1 in der Blickrichtung 176, wobei in diesem Fall die Bildaufnahmeeinheit 74 so positioniert wird, dass diese mit dem optisch durchlässigen Fenster 174 über dem Werkstück W1 steht und in der Blickrichtung 176 ein Bild des Werkstücks W1 ähnlich einer Draufsicht auf dieses erfasst, welches die äußeren Umrisse des Werkstücks W1 wiedergibt.

Das die äußeren Umrisse des Werkstücks W1 wiedergebende Bild B kann nun ebenfalls von der Bildauswerteeinheit 230 dahingehend verarbeitet werden, dass diese das Bild B mit gespeicherten Referenzmaßen des Werkstücks W1, im einfachsten Fall mit einem geeichten Referenzbild RB, vergleicht, und damit die Möglichkeit eröffnet, festzustellen, inwieweit das Werkstück W1 Maßabweichungen von den im Referenzbild RB festgelegten Maßen aufweist.

Bei einem weiteren Anwendungsfall des erfindungsgemäßen optischen Assistenzsystems ist die Bildaufnahmeeinheit 74 dazu eingesetzt, mit der Blickrichtung 156 eine Frontseite des Werkstücks W1 zu erkennen und beispielsweise zu erkennen, ob an der Frontseite F des Werkstücks W1 sämtliche Bohrungen BO eingebracht sind.

Auch hierbei erfolgt dies durch die Bildauswerteeinheit 230, welche das Bild B des Werkstücks W1 mit einem Referenzbild RB vergleicht und durch Muster vergleicht, d.h. Vergleich der erkennbaren Elemente, erkennt, ob sämtliche Bohrungen BO in der Frontseite F des Werkstücks W1 eingebracht sind.

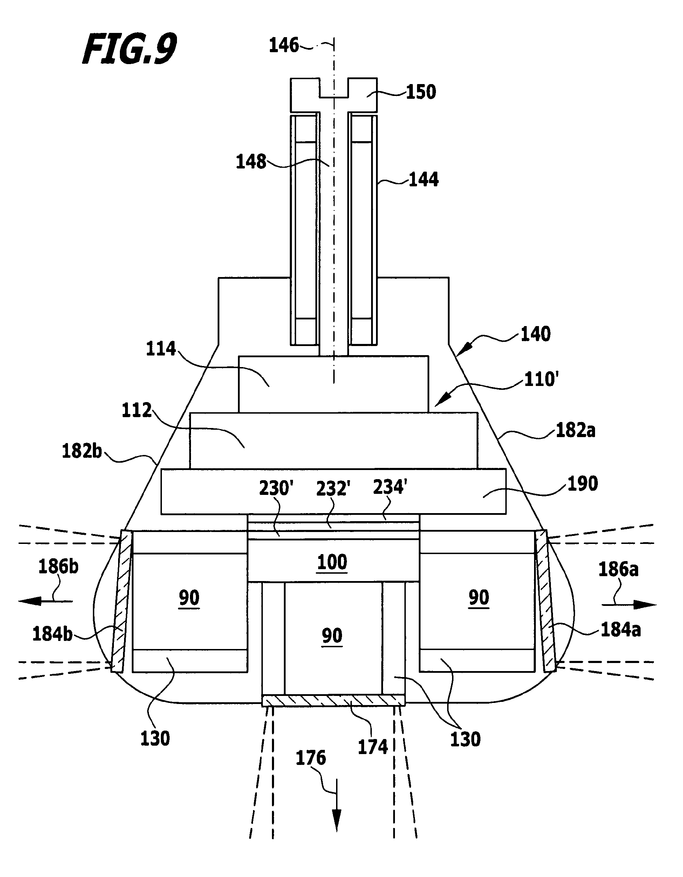

Bei einer Variante der vorstehend beschriebenen zweiten Ausführungsform der Bildaufnahmeeinheit 74 können die Bildauswerteeinheit 230' mit der Bilderkennungseinheit 232' und der Referenzbildspeicher 234' alternativ oder ergänzend zur vorstehend beschriebenen Lösung der Übertragungseinheit 100 (Fig. 8/9) zugeordnet werden, so dass die Bildauswertung zumindest teilweise auch bereits in der Bildaufnahmeeinheit 74 erfolgen kann und bei diesen Bildern nur die das Ergebnis der Auswertung darstellenden Daten zur Empfangseinheit 102 übertragen werden müssen.

Somit kann die Menge der zu übertragenden Daten bei derart ausgewerteten Bildern reduziert werden.

In diesem Fall steuert beispielsweise die interne Funktionssteuerung 190 auch die Bildauswerteeinheit 230' mit der mit der Bilderkennungseinheit 232' und den Referenzbildspeicher 234'.

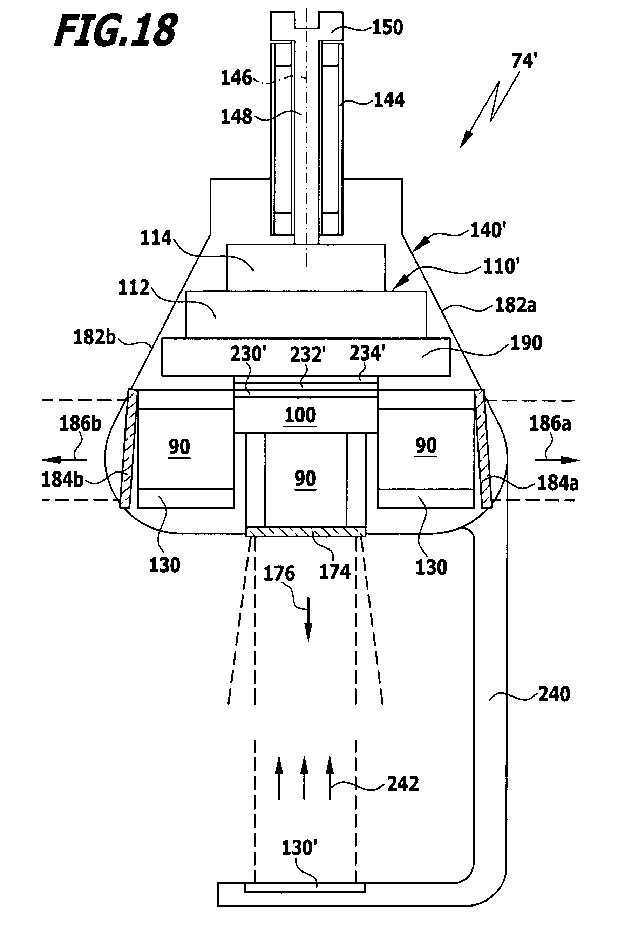

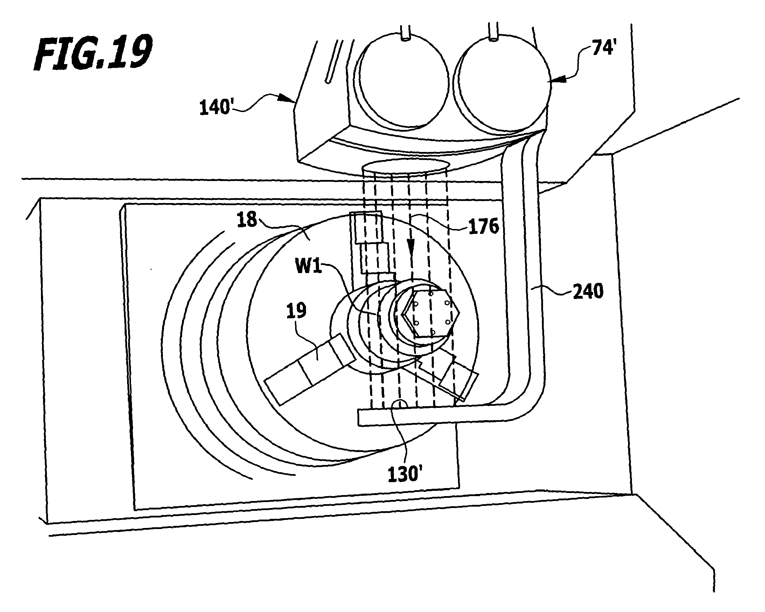

Bei einer dritten Ausführungsform der erfindungsgemäßen Bildaufnahmeeinheit 74', dargestellt in Fig. 18 und 19, ist an dem Gehäuse 140' ein Arm 240 vorgesehen, welcher die Objektausleuchtungseinheit 130' im Abstand von dem Fenster 174 und der diesem zugeordneten Bilderfassungseinheit 90 hält, so dass ein Vermessen einer Kontur des Werkstücks W1 im Durchlichtverfahren dadurch möglich ist, dass das Gehäuse 140' so bewegt wird, dass das Werkstück W1 zwischen der Objektausleuchtungseinheit 130' und der dem Fenster 174 zugeordneten Bilderfassungseinheit 90 positioniert ist und ganz oder teilweise in dem von der Objektausleuchtungseinheit ausgehenden und auf die dem Fenster 174 zugeordnete Bilderfassungseinheit 90 gerichteten Strahlungsfeld 242 liegt und somit von der Bilderfassungseinheit 90 ein Schattenbild der Kontur des Werkstücks W1 erfasst werden kann.

## Patentansprüche

1. Optisches Assistenzsystem für Werkzeugmaschinen (10) **dadurch gekennzeichnet, dass** eine in einem Arbeitsraum (64) der Werkzeugmaschine (10) positionierbare Bildaufnahmeeinheit (72, 74) und eine von der Bildaufnahmeeinheit (72, 74) getrennte, außerhalb des Arbeitsraums (64) positionierbare Empfangseinheit (102) umfasst, dass die Bildaufnahmeeinheit (72, 74) ein Gehäuse (120, 140) umfasst, welches innerhalb des Arbeitsraums (64) an mehreren Orten positionierbar ist, dass in dem Gehäuse (120, 140) eine Bilderfassungseinheit (90) mit einer Abbildungsoptik (92) und mit einem ein von der Abbildungsoptik (92) erzeugtes Bild (B) in elektronische Bildsignale umsetzenden Bildsensor (94) vorgesehen ist und dass in dem Gehäuse (120, 140) eine auf den Bildsignalen basierende, Daten zu der Empfangseinheit (102) übertragende Übertragungseinheit (100) angeordnet ist.

2. Assistenzsystem nach Anspruch 1, **dadurch gekennzeichnet, dass** in dem Gehäuse (120, 140) eine Energieversorgungseinheit (110) vorgesehen ist und dass insbesondere die Energieversorgungseinheit (110) einen Energiespeicher (112) und/oder eine Energieerzeugungseinheit (114) umfasst.

3. Assistenzsystem nach Anspruch 2, **dadurch gekennzeichnet, dass** die Energieerzeugungseinheit einen Generator (114) umfasst und dass insbesondere der Generator (114) durch einen externen Antrieb mechanisch antreibbar ist.

4. Assistenzsystem nach einem der voranstehenden Ansprüche, **dadurch gekennzeichnet, dass** das Gehäuse (120) der Bildaufnahmeeinheit (72) über ein flexibel an den mehreren Orten befestigbares Montageelement (126) im Arbeitsraum (64) montierbar ist.

5. Assistenzsystem nach einem der voranstehenden Ansprüche, **dadurch gekennzeichnet, dass** das Gehäuse (140) der Bildaufnahmeeinheit (74) an einem Werkzeugträger (30, 40) der Werkzeugmaschine (10) montierbar ist.

6. Assistenzsystem nach Anspruch 5, **dadurch gekennzeichnet, dass** das Gehäuse (140) in einer Werkzeughalteraufnahme (38, 48) an dem Werkzeugträger (30, 40) montierbar ist.

7. Assistenzsystem nach einem der voranstehenden Ansprüche, **dadurch gekennzeichnet, dass** das Gehäuse (120, 140) mindestens ein optisch transparentes Fenster (154, 164, 174, 184) für eine Aufnahme eines Bildes (B) aufweist.

8. Assistenzsystem nach Anspruch 7, **dadurch gekennzeichnet, dass** das Gehäuse (140) eine Schutzabdeckung (202) für ein Fenster (164) aufweist.

9. Assistenzsystem nach einem der Ansprüche 7 und 8, **dadurch gekennzeichnet, dass** das Gehäuse (140) mit einer Ausbringeinrichtung (210) für ein Freihaltemedium für das mindestens eine Fenster (164) versehen ist.

10. Assistenzsystem nach einem der Ansprüche 7 bis 9, **dadurch gekennzeichnet, dass** das Gehäuse (140) mit mehreren Fenstern (154, 164, 174, 184) versehen ist und dass insbesondere die Fenster (154, 164, 174, 184) für die Aufnahme eines Bildes (B) eines Objekts (O) im Arbeitsraum (64) mit unterschiedlichen Blickrichtungen (156, 166, 176, 186) vorgesehen sind.

11. Assistenzsystem nach einem der voranstehenden Ansprüche, **dadurch gekennzeichnet, dass** der Bilderfassungseinheit (90) eine Objektausleuchtungseinheit (130) zugeordnet ist.

12. Assistenzsystem nach einem der voranstehenden Ansprüche, **dadurch gekennzeichnet, dass** die Übertragungseinheit (100) die Daten über eine leitungsgebundene Kommunikationsstrecke (82) und/oder über eine drahtlose Kommunikationsstrecke (84) zu der Empfangseinheit (102) überträgt.

13. Assistenzsystem nach einem der voranstehenden Ansprüche, **dadurch gekennzeichnet, dass** der Empfangseinheit (102) eine Visualisierungseinheit (104) zugeordnet ist, auf welcher das Bild (B) des Objekts (O) darstellbar ist.

14. Assistenzsystem nach einem der voranstehenden Ansprüche, **dadurch gekennzeichnet, dass** in dem Gehäuse (120, 140) eine interne Funktionssteuerungseinheit (108, 190) vorgesehen ist, mit welcher die Bildaufnahmeeinheit (72, 74) steuerbar ist.

15. Assistenzsystem nach Anspruch 14, **dadurch gekennzeichnet, dass** die interne Funktionssteuerungseinheit (108, 190) mit einer externen Funktionseinheit (220) wechselwirkt und insbesondere mit der externen Funktionseinheit (230) über eine leitungsgebundene Kommunikationsstrecke (82) und/oder über eine drahtlose Kommunikationsstrecke (84) kommuniziert.
